Europäisches Patentamt

European Patent Office

Office européen des brevets

(19)

(11) **EP 1 334 065 B1**

(12) **FASCICULE DE BREVET EUROPEEN**

(45) Date de publication et mention
de la délivrance du brevet:
**29.12.2004 Bulletin 2004/53**

(51) Int Cl.⁷: **C01B 31/04**, H01M 4/58,
H01M 4/02

(21) Numéro de dépôt: **01982009.1**

(22) Date de dépôt: **24.10.2001**

(86) Numéro de dépôt international:
**PCT/CA2001/001511**

(87) Numéro de publication internationale:
**WO 2002/034670 (02.05.2002 Gazette 2002/18)**

(54) **PARTICULES DE GRAPHITE AYANT LA FORME D'UN PATATO DE ET UN FAIBLE TAUX D'IMPURET S EN SURFACE, PROC D POUR LEUR PR PARATION**

SPHÄROIDISCHE GRAPHITTEILCHEN MIT EINEM NIEDRIGEN GEHALT AN OBERFLÄCHENVERUNREINIGUNGEN SOWIE VERFAHREN ZU DEREN HERSTELLUNG

POTATO-SHAPED GRAPHITE PARTICLES WITH LOW IMPURITY RATE AT THE SURFACE, METHOD FOR PREPARING SAME

(84) Etats contractants désignés:
**AT BE CH CY DE DK ES FI FR GB GR IE IT LI LU MC NL PT SE TR**

(30) Priorité: **25.10.2000 CA 2324431**

(43) Date de publication de la demande:
**13.08.2003 Bulletin 2003/33**

(73) Titulaire: **Hydro-Québec**
**Montréal, Québec H2Z 1A4 (CA)**

(72) Inventeurs:
• **GUERFI, Abdelbast**
**Brossard, Québec J4X 1W2 (CA)**
• **BROCHU, Fernand**
**Longueuil, Québec J4L 3B1 (CA)**
• **KINOSHITA, Kimio**
**Cupertino, CA 95014 (US)**
• **ZAGHIB, Karim**
**Longueuil, Québec J4M 2M7 (CA)**

(74) Mandataire: **Sueur, Yvette et al**
**Cabinet SUEUR et L'HELGOUALCH,**
**109, boulevard Haussmann**
**75008 Paris (FR)**

(56) Documents cités:
**EP-A- 0 782 207          EP-A- 0 977 292**
**US-A- 5 478 364**

• **PATENT ABSTRACTS OF JAPAN vol. 2000, no. 12, 3 janvier 2001 (2001-01-03) & JP 2000 264614 A (SHARP CORP), 26 septembre 2000 (2000-09-26)**
• **DATABASE WPI Section Ch, Week 199915 Derwent Publications Ltd., London, GB; Class L03, AN 1999-177361 XP002190329 & JP 11 031508 A (MATSUSHITA DENKI SANGYO KK), 2 février 1999 (1999-02-02)**
• **ZAGHIB K ET AL: "Effect of graphite particle size on irreversible capacity loss" JOURNAL OF THE ELECTROCHEMICAL SOCIETY, JUNE 2000, ELECTROCHEM. SOC, USA, vol. 147, no. 6, pages 2110-2115, XP002190328 ISSN: 0013-4651**

**Description**

## DOMAINE DE L'INVENTION

La présente invention est relative à des particules de graphite modifié et à des particules à base de graphite présentant en outre la caractéristique d'avoir la forme d'un patatoïde. La présente invention concerne également des procédés permettant de préparer ces nouvelles particules ainsi que l'utilisation des particules ainsi obtenues notamment comme capteur d'humidité et/ou comme capteur d'oxygène. Ces procédés peuvent être monitoré par contrôle des valeurs prises par des fonctions mathématiques caractéristiques de la forme des structures cristallines (edge, basal, Lc et La) et géométriques du graphite. Ces nouvelles particules présentent en outre, dans le cadre d'une application électrochimique, une stabilité améliorée au cyclage en augmentant d'une part la densité de l'électrode et d'autre part la cinétique de diffusion de l'intercalant (Li, Na, ou autre).

## ART ANTÉRIEUR

Le graphite présente des propriétés électrochimiques intéressantes. Ainsi pour les graphites naturels qui se trouvent abondamment disponibles dans la nature on a mis en évidence une capacité réversible de 372mAh/g et un plateau de voltage proche du lithium.

Le graphite a été introduit dans les batteries lithiumion commerciales comme mentionné dans le brevet délivré à Sanyo aux États-Unis sous le numéro US-A-5.882.818. Ses caractéristiques intéressantes, en plus de son faible coût de revient, ont fait du graphite naturel un bon candidat comme anode dans les batteries lithhiumion. Cependant, l'épandage des électrodes uniformes demeure problématique à cause de la forme physique des ces particules qui se présentent sous forme de flocons. Pour cette raison, une mise en oeuvre efficace de l'épandage nécessite une étape supplémentaire de calendrage lors de la fabrication des électrodes pour batteries Li-ion (Energy Storage Systems for Electronics, by Testuya Osaka and Madhav Datta, (2000), pp 125). La densité de la compacité est faible ce qui donne des électrodes ayant des épaisseurs plus élevées. Les performances de l'anode dépendent du type de graphite et de la forme physique de ces particules. L'efficacité de la première intercalation de l'ion dans le graphite est reliée à la surface spécifique et la fraction de la surface edge (K. Zaghib et al, J. Electrochemical Soc. 147 (6) 2110 à 2115, 2000). Une faible surface spécifique est associée à une contribution en film de passivation plus faible.

Le graphite naturel se trouve exclusivement sous forme de paillette, alors que le graphite artificiel peut se trouver soit sous forme de paillette, de fibre ou sphérique. La forme de paillette présente un degré élevé d'orientation préférentielle qui induira une anisotropie dans l'électrode. Une telle orientation réduit la cinétique de l'intercalation du lithium à travers les (edges). Cependant le seul carbone sphérique qui se trouve sur le marché est le Mesocarbon Microbeads MCMB traité à 2800°C d'Osaka gaz (T.Kasuh et al., J. Power Source 68 (1997), 99). Ce carbone est un graphite artificiel qui nécessite un traitement coûteux à haute température pour être ordonné, ainsi qu'une synthèse complexe, ce qui fait augmenter son coût de production. La capacité réversible maximale obtenu pour ce graphite artificiel est de l'ordre de 280 mAh/g, ce qui est faible par rapport à la capacité correspondante d'un graphite naturel qui est de 372 mAh/g.

Le brevet américain US-A-6.139.990 délivré le 31 octobre 2000 de Kansai Netsukkagaku Kabushiki Kaisha décrit des particules de graphite modifié et arrondi, ayant une forme presque sphérique caractérisée en ce que leur degrés de circularité est supérieur ou égal à 0.86 et en ce que par mesure par diffraction aux rayons X, le pic du rapport d'intensité entre une face 002 (parallèle aux couches de graphite) la face 110 (perpendiculaire aux couches de graphite), qui servent d'indice de l'orientation aléatoire, ne doit pas être inférieure à 0.0050. Ces particules présentent une mauvaise homogénéité en ce qui concerne leur distribution granulométrique ce qui en limite l'utilisation dans des piles électrochimiques notamment avec le carbonate de propylène comme électrolyte. Ce qui représente un inconvénient majeur pour les applications basses température. On constate également une mauvaise sécurité des piles électrochimiques incorporant de telles particules de graphite.

La demande de brevet EP-A-0.916.618 déposée au nom de la société OSAKA GAS Co. Ltd, quant à elle décrit un matériau graphite dans lequel la création de cavités a été optimisée afin d'augmenter la capacité électrochimique des électrodes les contenant. Si ces matériaux se sont révélés présenter un intérêt en ce qui concerne leur utilisation dans des batteries de type primaire, ils sont de peu d'intérêt pour d'autres applications électrochimiques en raison notamment de la fragilité de leur structure et du manque de stabilité qui en découle pour les capacités supérieures à 400 mA/g.

La manipulation requise pour transformer le graphite naturel en graphite sphérique présente des bénéfices nets par rapport au graphite naturel standard présenté sous forme de flocons, ainsi que par rapport au graphite artificiel sphérique (MCMB).

Il existait donc un besoin pour des particules à base de graphite sous une forme stable facilement compactable jusqu'à obtenir une densité élevée, ces particules présentant des capacités électrochimiques et des anisotropies supérieures ou égales à celles des formes connues des particules de graphite. Ces particules permettent notamment la réalisation d'électrodes homogènes et compactes et favorisent d'autre part l'utilisation du PC.

## SOMMAIRE DE L'INVENTION

La présente invention concerne notamment des particules de graphite modifié ayant la forme d'un patatoïde possédant des impuretés dans leur structure interne et possédant en surface, un taux faible voir nul d'une ou de plusieurs impuretés, notamment des impuretés habituellement présentes dans les graphites naturels.

La présente invention est aussi relative à des particules à base de graphite modifié constituées de particules prismatiques de graphite recouvertes d'un dépôt métallique et/ou d'un dépôt carbonique.

Les particules de graphite selon la présente invention sont notamment utilisables comme capteur d'humidité et/ou comme capteur d'oxygène et, notamment en raison de leur performance au cyclage sont utilisables dans la fabrication d'électrodes négatives, préférentiellement dans la fabrication d'électrodes négatives pour générateurs électrochimiques rechargeables.

La présente invention concerne également des procédés permettant la préparation de ces particules et la préparation d'électrodes les contenant.

## BRÈVE DESCRIPTION DES DESSINS

Figure-1/15: Selon le modèle 1, transformation des particules prismatiques en particules sphériques en diminuant le fb et augmentant le fe. Cette transformation peut se faire par plusieurs techniques:Jet mill, attrition , ball mill, hammer mill, CF mill ou atomizer mill, planetary mixer, hybridiser.

Selon le modèle 1, transformation des particules prismatiques en particules sphériques en gardant fe et fb constants. Cette transformation se fait par enrobage des particules par un métal, polymère ou carbone.

Figure-2/15: Selon le modèle 2, transformation des particules cylindriques en particules sphériques en diminuant le fb et augmentant le fe. Cette transformation peut se faire par plusieurs techniques:Jet mill, attrition , ball mill, hammer mill, CF mill ou atomizer mill, planetary mixer, hybridiser.

Selon le modèle 2, transformation des particules prismatiques en particules sphériques en gardant fe et fb constants. Cette transformation se fait par enrobage des particules par un métal, un polymère ou un carbone.

Figure-3/15: Selon le modèle 1 le graphite artificiel ou naturel de forme prismatique en présence de ses impuretés et d'agents solubles de type NaCl et $NH_4F$ ou autres (de préférence de forme sphérique) est transformé en graphite de forme sphérique en diminuant la fraction basale fb et en augmentant la fraction edge (fe). Cette transformation peut se faire par plusieurs techniques:Jet mill, attrition, ball mill, hammer mill, CF mill ou atomizer mill, planetary mixer, hybridiser.

Figure-4/15: Selon le modèle 2 la fibre de carbone, le graphite artificiel ou naturel de forme cylindrique en présence de ses impuretés et d'agents solubles de type NaCl et $NH_4F$ ou autres (de préférence de forme sphérique) est transformé en graphite de forme sphérique en diminuant la fraction basale fb en augmentant la fraction edge (fe). Cette transformation peut se faire par plusieurs techniques:Jet mill, attrition , ball mill, hammer mill, CF mill ou atomizer mill, planetary mixer, hybridiser.

Figure-5/15: Selon le modèle 1, le graphite artificiel ou naturel de forme prismatique, en présence de ses impuretés et d'agents non solubles de type $SiO_2$ et $TiO_2$ céramique, composé dur ou autre (de préférence de forme sphérique), est transformé en graphite de forme sphérique en diminuant la fraction basale (fb) et en augmentant la fraction edge (fe). Cette transformation peut se faire par plusieurs techniques:Jet mill, attrition , ball mill, hammer mill, CF mill ou atomizer mill, planetary mixer, hybridiser.

Figure-6/15: Selon le modèle 2 le graphite artificiel ou naturel de forme cylindrique en présence de ses impuretés et d'agents non solubles de type $SiO_2$, et $TiO_2$, céramique, composé dur ou autre (de préférence de forme sphérique) est transformé en graphite de forme sphérique en diminuant la fraction basale (fb) et en augmentant la fraction edge (fe). Cette transformation peut se faire par plusieurs techniques: Jet mill, attrition , ball mill, hammer mill, CF mill ou atomizer mill, planetary mixer, hybridiser.

Figure-7/15: modélisation comparative entre le modèle prismatique et cylindrique pour deux types de particules de 2 et 40 μm.

Figure-8/15: Particules de graphite avant attrition.

Figure-9/15: Particules de graphite après attrition

Figure-10/15: Résultats électrochimiques du graphite naturel NG20, après attrition.

Figure-11/15: Résultats électrochimiques avec graphite commercial sphérique MCMB.

Figure-12/15: Photo réalisée au microscope électronique à balayage montrant la forme patatoïde d'une particule de 12 μm obtenue dans l'exemple 3, selon l'invention.

Figure-13/15: Photo réalisée au MEB montrant l'évolution des fonctions basales et edge pour une particule de graphite conforme au modèle mathématique. 1.

Figure 14/15: Photo réalisée au MEB montrant la forme patatoïde d'une particule de graphite obtenue dans l'exemple 3, de 12 μm.

Figure 15/15: photo d'une particule obtenue dans l'exemple 3, réalisée au MEB, montrant que la fonction basale (fb) diminue et qu la fonction (fe) augmente

## DESCRIPTION DE L'INVENTION

Un premier objet de la présente invention est constitué par des particules de graphite modifié obtenues à partir de graphite (de préférence à partir de graphite synthétique), les paramètres structurels des dites particules vérifiant au moins une des relations $fe_1 = [Y+1]/[(Y+1) + (B/2T)(Y-1)]$ et $fe_2 = [Y+1]/[(Y+1) + (B/T)(Y-1)]$, dans lesquelles Y représente un nombre entier supérieur ou égal à 1, B représente la longueur de la particule en μm, T représente l'épaisseur de la particule en μm. Ces particules ayant en outre la forme d'un patatoïde et possédant au moins une des deux caractéristiques suivantes:

- une densité tab mesurée selon la méthode associée à l'appareil commercialisé sous l'appellation Logan Instrument Corp. Model Tap-2 comprise entre 0,3 et 1,5, de préférence comprise entre 0,5 et 1,4, plus préférentiellement encore comprise entre 1 et 1,3 g/cc; et

- une dispersion granulométrique mesurée selon la méthode associée à l'analyseur de particules commercialisé sous l'appellation Microtac model X100 Particle Analyser , telle que le rapport de distribution D90/D10 varie entre 2 et 5 et les particules ont une taille comprise entre 1μm et 50 μm, de préférence telle que le rapport de distribution D90/D10 varie entre 2.2 et 4.2 et les particules ont une taille comprise entre 2μm et 30 μm.

Un deuxième objet de la présente invention est constitué par des particules de graphite modifié obtenues à partir de graphite, les dites particules ayant la forme d'un patatoïde, possédant des impuretés dans leur structure interne et possédant en surface, un taux d'une ou de plusieurs impuretés, mesuré selon la méthode du détecteur rétrodiffusé définie dans la publication Kimoto S. et Hashimoto H., (1966), dans Eectron Microphone, John Wiley, New York, page 480 ou dans Gedcke, D. A., Ayers, J.B. et DeNee, P.B. (1978),SEM/1978, SEM Inc, AMF O'Hare, Illinois, page 581 qui est inférieur à 10 %, qui de préférence varie entre 2% et 4% et les dites particules possédant en outre au moins une des trois caractéristiques suivantes:

- une densité tab mesurée selon la méthode précédemment identifiée comprise entre 0,3 et 1,5, de préférence comprise entre 0,5 et 1,4, plus préférentiellement encore comprise entre 1 et 1, 3 g/cc;

- une dispersion granulométrique mesurée selon la méthode précédemment identifiée telle que le rapport D90/D10 varie entre 2,2 et 4,2 et les particules ont une taille comprise entre 2 et 30 μm; et

- elles comportent attachées à leur surface des particules (de préférence de forme patatoïde, plus préférentiellement encore de forme sphérique) de Nacl et/ou de $NH_4F$, de préférence la masse de ces articules de Nacl et/ou de NH4F représente de 1 à 10 %, de préférence de 1 à 4 % de la masse totale des particules de graphite modifié.

Le taux d'impureté en surface du graphite peut être réduit de différentes façons, une méthode particulièrement efficace est celle décrite dans la demande PCT/CA100233 détenue par la société Hydro-Québec.

Une sous famille préférentielle des particules selon le deuxième objet de la présente demande est constitué par les particules de graphite modifié pour qui l'analyse TGA réalisée selon la méthode associée à l'appareil commercialisé sous l'appelation TGA/DTA Model SDT 2960, TA Instruments Inc., New Castle, DE donne une valeur de la température initiale associée à la perte de poids comprise entre 560 et 660 degrés Celcius, comme cela est illustré par la Figure 11/11.

Les parties particules de graphite modifié selon l'invention peuvent comprendre des impuretés. Par exemple au moins une impureté du groupe constitué par les éléments chimiques Fe, Mo, Sb, As, V, Cr, Cu, Ni, Pb, Co, Ca, Al, Ge, Si, Ba, Be, Cd, Ce, Co, Ciu, Dy, Eu, La, Li, Mo, Nd, Ni, Pb et Pr.

Une sous famille préférentielle parmi les particules de graphite selon l'invention est constituée par les particules dans lesquelles le pourcentage en poids d'impuretés présentes dans lesdites particules, exprimé par rapport à la masse totale des particules de graphite modifié et mesuré selon la méthode des cendres, est compris entre 1 et 10 %, de préférence compris entre 2 et 4 %.

Plus particulièrement intéressantes sont les particules de graphite selon l'invention qui sont substantiellement dépourvues d'impuretés en surface, de préférence celles dépourvues d'impuretés en surface.

Un troisième objet de la présente invention est constitué par les particules de graphite modifié obtenues à partir de graphite, lesdites particules ayant la forme d'un patatoïde et contenant de 5 à 20 % d'au moins un des composés suivants $SiO_2$, MgO, céramiques ou un mélange de ces derniers, les dits composés étant de préférence attachés aux particules de graphite modifié par des forces physiques et possédant au moins une des trois caractéristiques suivantes:

- une densité tab mesurée selon la méthode précédemment décrite comprise entre 0.3 et 1.5, de préférence comprise entre 0.4 et 1.4, plus préférentiellement encore comprise entre 1 et 1,3 g/cc;

- une dispersion granulométrique mesurée selon la méthode précédemment définie telle que le rapport D90/D10 varie entre 2 et 5 pour des particules d'une taille comprise entre 1 et 50 $\mu$m, de préférence telle que le rapport D90/D10 varie entre 2,2 et 4,2 pour des particules ayant une taille comprise entre 2 et 30 $\mu$m; et

- elles comportent attachées à leur surface des particules (de préférence de forme patatoide et plus préférentiellement encore de forme sphérique) de NaCl et ou de $NH_4F$, de préférence la masse de ces particules de NaCl et ou de NH4F représente de 1 à 10 % de la masse totale des particules de graphite modifié.

Une famille particulièrement avantageuse de particules de graphite selon la présente invention est constitué par l'ensemble des particules de graphite modifié dans lesquelles la distance interplan $d_{002}$ (mesurée selon la méthode associée au. diffractomètre commercialisé sous l'appellation XRD analysis Siemens Model D500 Diffractometer) varie de 3,3 à 3,4 Angströms et/ou le BET (mesuré en utilisant la méthode associée à l'appareil Quantachrome Autosorb automated gas sorption system using $N_2$) varie entre 0.5 g/m$^2$ et 50 g/m$^2$.

Parmi les particules de graphite modifié de l'invention celles ayant une stabilité au cyclage supérieure à 500 cycles présentent un intérêt particulier dans le cadre d'applications électrochimiques.

Un quatrième objet de la présente invention est constitué par un procédé de préparation de particules de graphite (de préférence à partir de graphite naturel)objet de la présente invention, par mise en oeuvre d'au moins un moyen physique permettant la réduction d'au mois 50 % de la fonction basale (fb) et l'augmentation d'au moins 50 % de la fonction edge (fe), un tel moyen physique étant de préférence l'attrition, un jet mill, bail mill, hammer mill, atomizer mill, des particules de graphite en présence d'au moins un composé chimique choisi dans le groupe constitué par les composés de formule $MF_z$, dans laquelle M représente un métal alcalin ou alcalino-terreux et z représente 1 ou 2, (de préférence MFz représente $CaF_2$, $BaF_2$, LiF), par NaCl et par $NH_4F$ ou par un mélange de ces derniers, le ou lesdits composés étant de préférence ajouté(s) sous forme solide, de préférence au début de l'étape de mise en oeuvre du ou des moyens physiques permettant la réduction de la fonction basale définie par la relation fb = 1 - fe et l'augmentation de la fonction fe définie par la relation $(2B/La + T/d_{002})/2B/d_{100} + T/d_{002})$ dans laquelle B, La = $d_{100}(2n+1)$ représente $d_{002}$, n représente un nombre de plans. Ces fonctions sont définies et analysées de façon détaillée dans la publication Effect of Graphite Particle Size on Irreversible Capacity Loss, K. Zaghib, G. Nadeau, et K. Kinoshita, Journal of the Electrochemical Society 147 (6) 2110-2115 (2000. Ce document est intégralement incorporé à la présente demande par référence.

Comme décrit dans la demande de brevet PCT/CA0100233 d'Hydro-Québec, l'utilisation de $NH_4F$ en surface sur le graphite lors du broyage est très importante car le $NH_4F$ lors de la purification du graphite en présence de $H_2SO_4$ et $H_2O$ génère du HF pour dissoudre les impuretés, en particulier le $SiO_2$.

De la même façon, l'utilisation de NaCl en surface sur le graphite lors du broyage est très important car NaCl lors de la purification du graphite en présence de $H_2SO_4$ génère du HCl qui lui aussi dissout les impuretés en surface, en particulier les métaux Fe, Mo et autres.

Selon un mode avantageux de mise en oeuvre dudit procédé la réduction de la fonction basale et l'augmentation de la fonction edge, de préférence l'arrondissement des particules, est réalisé à l'aide d'un moyen d'attrition, ledit moyen étant préférentiellement constitué par des billes tel que des billes d'acier, des billes en céramique ou un mélange de billes d'acier et en céramique.

Un cinquième objet de la présente invention est constitué par un procédé de préparation de particules de graphite modifié selon la revendication 1 ou 2 à partir de préférence de graphite naturel, comportant au moins les deux étapes:

i) de modification de la forme des particules de graphite par mise en oeuvre d'au moins un moyen physique permettant la réduction d'au moins 50 % de la fonction basale (fb) et l'augmentation d'au moins 50 % de la fonction edge (fe), un tel moyen physique étant de préférence l'attrition (de préférence un jet mill, ball mill, hammer mill, un atomizer mill)de particules de graphite synthétique(de préférence de graphite naturel,) en présence d'au moins un composé chimique choisi dans le groupe constitué par les composés de formule $MF_z$, dans laquelle M représente un métal alcalin ou alcalino-terreux et z représente 1 ou 2, de préférence $MF_z$ représente $CaF_2$, $BaF_2$,LiF

ou un mélange de ces derniers, le ou lesdits composés étant de préférence ajoutés sous forme de préférence solide, de préférence à température ambiante, de préférence au début de l'étape de mise en oeuvre du ou des moyens permettant la réduction de la fonction basale et l'augmentation de la fonction edge; et

ii) de réduction du taux d'impuretés de surface de préférence par purification, de préférence par purification chimique des particules de graphite obtenues dans l'étape i).

Selon un mode de réalisation avantageux, les particules de graphite utilisées au départ du procédé ont une taille comprise entre 1 et 450 μm, de préférence comprise entre 2 et 350 μm.

Selon un autre mode avantageux de réalisation le traitement d'attrition est réalisé en présence d'un additif, de préférence d'un additif de type oxyde métallique, tel que $SiO_2$, $TiO_2$, $ZrO_2$ et, de préférence, en présence de billes d'acier, de billes en céramique ou en présence d'un mélange de billes d'acier et en céramique.

Une variante préférentielle consiste à mettre en oeuvre le procédé de l'invention dans des conditions telles qu'au moins une des deux étapes est réalisée dans une atmosphère contrôlée ou à l'air, l'atmosphère contrôlée étant préférentiellement à base d'azote, d'argon, d'hélium ou un mélange de ces gaz.

L'étape i) peut être est une étape hybride mettant en oeuvre à la fois un Jet milling et une attrition, l'attrition étant alors de préférence réalisée après la mise en oeuvre du jet milling.

Selon un mode particulièrement avantageux, l'étape i) du procédé est réalisée par mise en oeuvre d'un jet milling.

Un sixième objet de la présente invention est constitué par des particules de graphite modifié telles que ci-avant et ci-après définies, comme capteur d'humidité et/ou comme capteur d'oxygène.

Un septième objet de la présente invention est constitué par les électrodes négatives, préférentiellement par les électrodes négatives pour générateur électrochimique rechargeable préparée avec un liant de préférence, avec un liant de type PVDF, PTFE et avec des particules d'un graphite selon l'un quelconque des objets de la présente invention.

Un huitième objet de la présente invention est constitué par un procédé de préparation d'une électrode pour générateur rechargeable à base de particules de graphite selon la présente invention ou à base de particules de graphite telles qu'obtenues .par un procédé selon l'invention comprenant au moins les étapes suivantes:

a- de solubilisation d'au moins un liant(choisi de préférence dans le groupe constitué par PVDF, PTFE) dans un solvant (de préférence dans un solvant fort choisi dans le groupe constitué par NMP (N-méthyl pyrolidone), cyclopentanone à une concentration la plus élevée possible(de préférence supérieure à 1g/cc), pour obtenir une solution visqueuse (A) ;

b - d'épandage de la solution visqueuse obtenue dans l'étape précédante qui est un mélange poudre-liant-composition (B) sur un dispositif de type collecteur, de préférence sur un collecteur de type métallique; et/ou de type collecteur troué métallique, ledit collecteur ainsi traité constituant une électrode; et

c - de séchage de l'électrode préparée dans l'étape b), le séchage se fait de préférence à l'aide d'une lampe infrarouge ou à l'aide d'un élément chauffant.

Selon un mode préférentiel de réalisation de ce procédé, dans l'étape c) on utilise parallèlement deux moyens distincts pour sécher l'électrode, ces moyens étant préférentiellement un séchage par lampe infrarouge et un séchage par élément.

Un neuvième objet de la présente invention est constitué par les particules à base de graphite modifié constituées de particules prismatiques de graphite recouvertes d'un dépôt métallique et/ou d'un dépôt carbonique, les paramètres structurels des dites particules vérifiant les relations $fe_1 = [Y+1]/[(Y+1) + (B/2T)(Y-1)]$ et $fe_2 = [Y+1]/[(Y+1) + (B/T)(Y-1)]$, dans lesquelles : Y représente un nombre réel supérieur ou égal à 1, B représente la longueur de la particule en μm, T représente l'épaisseur de la particule en μm, les dites particules ayant la forme d'un patatoïde et possédant au moins une des deux caractéristiques suivantes:

- une densité tab mesurée selon la méthode précédemment définie, de préférence comprise entre 0,3 et 1,5, plus préférentiellement comprise entre 0,5 et 1,4, plus préférentiellement encore comprise entre 1 et 1,3 g/cc; et

- une dispersion granulométrique mesurée selon la méthode précédemment définie telle que le rapport D90/D10 varie entre 2 et 5 et les particules ont une taille comprise entre 1 et 50 μm, de préférence telle que le rapport D90/D10 varie entre 2.2 et 4.2 et les particules ont une taille comprise entre 2 et 30 μm.

De préférence la taille de ces particules à base de graphite est comprise entre 1 et 50 µm.

Selon un mode avantageux de réalisation ces particules ont une sphéricité de 80 % et plus.

Parmi l'ensemble de ces particules à base de graphite une sous famille préférentielle est constituée par les particules dans lesquelles l'épaisseur moyenne de l'enrobage métallique et/ou carbonée est comprise entre 50 nm et 2 µm.

Une autre sous-famille préférentielle est constituée par les particules à base de graphite constituées d'un noyau de graphite enrobé, ledit noyau constituant au moins 90 % en poids de la masse totale de la particule à base de graphite, les 10 % restant étant préférentiellement constitués d'au moins un métal choisi dans le groupe constitué par Ag, Si, Al et Cu et/ou de carbone et/ou de polymère carbonisé de préférence sous la forme prismatique ou de fibre.

Un dixième objet de la présente invention est constitué par un procédé de préparation des particules à base de graphite, à partir de particules de forme prismatique par enrobage des particules, en maintenant la fonction basale (fb) et la fonction edge (fe) constantes tout en enveloppant la surface du graphite par un dépôt métallique ou carbonique de manière à obtenir une sphéricité de 80 % et plus.

Un onzième objet de la présente invention est constitué par un procédé de purification (de préférence) in situ de la surface de particules de graphite, par enrobage de ces particules, en présence de leurs impuretés, par du carbone.

Un douzième objet de la présente invention est constitué par l'utilisation dans une pile électrochimique des particules de graphite modifié selon l'invention, avec un contrôle de la fonction basale (fb) qui permet leur utilisation en présence d'un électrolyte à base de Polyéthylène Carbonate (PC), la concentration en PC dans l'électrolyte étant alors inférieure à 50 % en volume du mélange électrolytique.

Les batteries sécuritaires résultant de cette utilisation constituent également un objet de la présente invention.

Un treizième objet de la présente invention est constitué par l'utilisation des particules à base de graphite selon l'invention, avec une fonction basale (fb) constante, ce qui permet leur utilisation en présence d'une électrolyte à base de Polyéthylène Carbonate (PC), jusqu'à une concentration en PC dans l'électrolyte étant alors inférieure ou égale à 100 % en volume du mélange électrolytique. Les batteries résultant de cette utilisation sont sécuritaires et constituent un objet de la présente invention.

Ainsi dans le cadre de la présente invention on décrit notamment un nouveau procédé pour transformer les particules du graphite naturel en particules sphériques. La poudre du graphite brut, en présence de ces impuretés qui jouent un rôle de microabrasif (brevet HQ), ayant des particules initiales de 375µm est soumis à un broyage par attrition afin de réduire sa taille à un d50 de 10µm. Des billes d'acier sont ajoutées à la poudre de graphite dans un rapport massique de 1/10 graphite/bille. Le broyage (ATTRITOR, type B, size S Union Process Inc, AKRON) est accéléré à une vitesse de 400 RPM pendant 60 minutes. Après 60 minutes, le broyage est arrêté et une évaluation de la granulométrie et de la surface spécifique est conduite sur l'échantillon. Si la distribution granulométrique désirée n'est pas atteinte, le broyage est repris pendant une période de 10 minutes. Ces étapes seront poursuivies jusqu'à ce que le $d_{5o}$ de 10 µm soit obtenu. Un second échantillon de 500g est broyé dans un broyeur à jet d'air Alpine pour obtenir un $d_{5o}$ de 10µm. Une étude comparative par microscope à balayage est effectuée sur les deux échantillons après les broyages. Ceci nous permet d'identifier si la forme des paillettes obtenues par attrition se rapproche plus de celle d'une sphère. Nous avons aussi utilisé un broyage hybride; la taille de la particule est réduite en premier à 20 µm par Jet Milling puis la particule est taillée par l'attrition jusqu'à 10µm.

L'utilisation du graphite sphérique comme anode dans une configuration de batterie rechargeable a beaucoup d'avantages par rapport à un graphite en paillettes, notamment:

- la densité de compacité est augmentée ;
- l'épandage est plus uniforme ;
- la porosité est réduite ;
- la fraction des plans basals est réduite;
- un meilleur contact électrique inter-particules;
- la décomposition de l'électrolyte est réduite;
- un taux de charge-décharge rapide;
- la cinétique d'intercalation est meilleure; et
- la sécurité de la batterie est améliorée.

L'application de ce procédé sur le graphite naturel améliore ses performances électrochimiques et sa mise en épandage en électrode. Le graphite naturel mis sous forme sphérique combine les avantages des deux carbones: ceux du graphite naturel et ceux du graphite artificiel sphérique. L'énergie est maintenue à son maximum avec le graphite naturel (capacité et voltage moyen). La contribution des plans basals est réduite ce qui favorise d'une part la réduction de la capacité irréversible due à la passivation et l'accroissement des parties diffusionnelles (edges) le long de l'axe cristallographique C (perpendiculaire aux plans formés par les atomes carbones). De plus, le problème d'anisotropie, est réduit et la cinétique d'intercalation améliorée. Les particules sphériques rendent l'épandage des électrodes plus homogène et les électrodes obtenues moins poreuses. L'épaisseur des électrodes avec des particules sphériques est mieux contrôlée et peut atteindre des épaisseurs plus minces pour des applications de puissance telles que les pulses pour télécommunication et appels de puissance pour les véhicules hybrides. Ces caractéristiques facilitent le design des batteries Li-ions super-mince jusqu'à l'échelle des batteries polymères.

Modèles de calcul de la relation entre les particules du graphite et leurs surfaces (basal et edge) : comparaison entre la structure prismatique et sphérique.

### Modèle I

Un modèle mathématique pour la particule sphérique a été développé afin d'exprimer la relation entre la taille du cristallite du graphite et les sites en surface en utilisant les paramètres cristallographiques a, b et c. Dans ce modèle, on considère que la sphère est formée de couches prismatiques de dimension Ai.Bi (plan basal) et d'épaisseur T (edge) empilés l'un sur l'autre.

On considère aussi que les paramètres A et B sont plus petits pour le même facteur (Y) au fur et à mesure qu'on s'éloigne de la couche centrale (0) vers le sommet (n) ou vers le bas (n) de la particule (Fig. 1)

| Cross-section | Top-view | Elementary particle |

**Fig. 1**

**Couche centrale (0) : A, B, T**

Couche (1):

$$A_1, B_1, T \text{ avec } A = Y\,A_1, \; B = Y\,B_1 \qquad \underline{\text{et que } Y \geq 1} \qquad (1)$$

$$A_1 = A\,/Y \;, \; B_1 = B\,/Y$$

Couche (2):

$$A_2, B_2, T \text{ avec } A_1 = Y\,A_2, \; B_1 = Y\,B_2 \qquad (2)$$

$$A_2 = A_1\,/Y = A/Y^2 \;, \; B_2 = B_1\,/Y = B/Y^2$$

Couche (3):

$$Couche\ (3):$$

$$A_3, B_3, T\ avec\ A_2 = Y\ A_3\quad,\quad B_2 = Y\ B_3 \qquad\qquad (3)$$

$$A_3 = A_2\ /Y = A/Y^3\ ,\ B_3 = B_2\ /Y = B/Y^3$$

$$\vdots$$

$$Couche\ (n)\ :$$

$$A_n, B_n, T\quad avec\ A_{n-1} = Y\ A_n\quad,\quad B_{n-1} = Y\ B_n \qquad\qquad (4)$$

$$A_n = A_{n-1}\ /Y = A/Y^n\ ,\ B_n = B_{n-1}/Y = B/Y^n$$

Donc, pour la surface du edge :

$$EA = 2T[\ (A+B) + (A_1+B_1) + (A_2+B_2) + (A_3+B_3) +. + (A_n+B_n)] \qquad (5)$$

Par substitution des valeurs de $A_1$, $B_1$, $A_2$, $B_2$, .., $A_n$, $B_n$ des équations 1,2,3 et 4 dans 5;

$$EA = 2T(A+B)[1+1/Y + 1/Y^2 + 1/Y^3 +.... + 1/Y^n]$$

$$= 2T(A+B)\Sigma 1/Y^i\ (i=0\ to\ n) \qquad (6)$$

Vue la symétrie de la sphère, l'équation (6) prendra la forme:

$$EA = 4T(A+B)[\Sigma 1/Y^i] - 2T(A+B),\ (i= 0\ to\ n) \qquad (7)$$

La série $[\Sigma 1/Y^i]$ (i = 0 à n) converge vers le terme

$$Y/(Y-1)$$

(table mathématique $1+ x + x^2 +...+ x^n = 1/(1-x)$, avec

$$1<x<1)$$

$$EA = 4T(A+B)Y(Y-1)^{-1} - 2T(A+B)$$

$$EA = 2T(A+B)[2Y(Y-1)^{-1} - 1] \qquad (8)$$

Pour la surface des plans basals:

$$BA = 2[(AB - A_1B_1) + (A_1B_1 - A_2B_2) + (A_2B_2 - A_3B_3) + ... (A_{n-1}B_{n-1} - A_nB_n)]$$

$$= 2[AB - A_nB_n]$$

$$= 2AB[1 - 1/Y^{2n}]$$

$$BA = 2AB[1 - 1/Y^{2n}] \qquad (9)$$

La surface totale sera:

$$S_t = EA + BA$$

$$= 2T(A+B)[2Y(Y-1)^{-1} - 1] + 2AB[1 - (1/Y^{2n})]$$

La fraction des sites edge ($f_e$);

$$f_e = EA/S_t$$

$$= 2T(A+B)[\ 2Y(Y-1)^{-1} - 1]/[2T(A+B)[2Y(Y-1)^{-1} - 1] + 2AB[1 - (1/Y^{2n})]]$$

$$f_e = [Y+1]/[(Y+1) + [AB/T(A+B)][1 - (1/Y^{2n})](Y-1)] \qquad (10)$$

Quand, A=B;

$$f_e = [Y+1]/[(Y+1) + (B/2T)(1 - Y^{-2n})(Y-1)] \qquad (11)$$

1) dans un cas idéal, quand $n \to \infty$ , $Y^{-2n} \to 0$;
(lorsqu'on considère un nombre infini de couches prismatiques)

$$f_e = [Y+1]/[(Y+1) + (B/2T)(Y-1)] \qquad (12)$$

l'équation (12) exprime la relation entre la surface des edges en fonction des dimensions de la particule et du paramètre Y.

### Modèle 2

Si on considère que l'approximation de la particule de graphite est formée par des particules élémentaires cylindriques, avec un diamètre B et une épaisseur T (Fig. 2).

Fig. 2

Les surfaces edge et basale sont définies par :

$$EA = \pi BT$$

$$BA = \pi B^2/2$$

d'ou la fraction $f_e$

$$f_e = [Y+1] / [(Y+1) + (B/T)(1-Y^{-2n})(Y-1)] \tag{13}$$

1) Quand $n \to \infty$, $Y^{-2n} \to 0$

$$f_e = [Y+1]/[(Y+1) + (B/T)(Y-1)] \tag{14}$$

De ces deux modèles, on peut comprendre que l'évolution des plans basals et edges de la forme prismatique vers la forme sphérique mène à une diminution remarquable de la surface des plans basals. Ce qui fait augmenter la fraction de la surface edge par rapport à la surface totale de la particule. De point de vue électrochimique, la passivation sera réduite avec la réduction de la surface basale et d'autre part, l'intercalation sera plus accessible sur une grande surface edge. Pour une valeur donnée du paramètre (Y), où $Y \geq 1$, on peut comparer la fraction $f_e$ de la surface edge obtenue dans les équations 12 et 14. Les tableaux 1.a-d présentent les résultats obtenus de la fraction edge ($f_e$) calculée pour les deux approximations.

Table 1.a :

| Y=1.001 | | | | | |
|---|---|---|---|---|---|
| Particle size (μ) | B(μ) basal length | T(μ) edge length | $f_e$ prismatic | $f_e$ cylindrical | Ecart(%) ($f_e$p-$f_e$c) |
| 2 | 2 | 0.21 | 0.99763 | 0.99526 | 0.2363 |
| 12 | 12 | 0.49 | 0.99392 | 0.98791 | 0.60089 |
| 20 | 20 | 1.54 | 0.99677 | 0.99355 | 0.32139 |
| 30 | 30 | 2.03 | 0.99632 | 0.99267 | 0.36523 |
| 40 | 40 | 2.85 | 0.99651 | 0.99303 | 0.34706 |

Table 2.b :

| Y=1.01 | | | | | |
|---|---|---|---|---|---|
| Particle size (μ) | B(μ) basal length | T(μ) edge length | $f_e$ prismatic | $f_c$ cylindrical | Ecart(%) ($f_e$p-$f_e$c) |
| 2 | 2 | 0.21 | 0.97686 | 0.95476 | 2.2096 |
| 12 | 12 | 0.49 | 0.94258 | 0.89139 | 5.1185 |

Table 2.b :  (suite)

| Y=1.01 | | | | | |
|---|---|---|---|---|---|
| Particle size (μ) | B(μ) basal length | T(μ) edge length | $f_e$ prismatic | $f_c$ cylindrical | Ecart(%) ($f_e$p-$f_e$c) |
| 20 | 20 | 1.54 | 0.96871 | 0.93931 | 2.9396 |
| 30 | 30 | 2.03 | 0.96454 | 0.93151 | 3.303 |
| 40 | 40 | 2.85 | 0.96626 | 0.93473 | 3.1533 |

Table 3.c :

| Y=1.1 | | | | | |
|---|---|---|---|---|---|
| Particle size (μ) | B(μ) basal length | T(μ) edge length | $f_e$ prismatic | $f_e$ cylindrical | Ecart(%) ($f_e$p-$f_e$c) |
| 2 | 2 | 0.21 | 0.81516 | 0.68799 | 12.717 |
| 12 | 12 | 0.49 | 0.63168 | 0.46164 | 17.003 |
| 20 | 20 | 1.54 | 0.76382 | 0.61788 | 14.593 |
| 30 | 30 | 2.03 | 0.73972 | 0.58695 | 15.277 |
| 40 | 40 | 2.85 | 0.74953 | 0.5994 | 15.013 |

Table 4.d :

| Y=1.5 | | | | | |
|---|---|---|---|---|---|
| Particle size (μ) | B(μ) basal length | T(μ) edge length | $f_e$ prismatic | $f_e$ cylindrical | Ecart(%) ($f_e$p-$f_e$c) |
| 2 | 2 | 0.21 | 0.5122 | 0.34426 | 16.793 |
| 12 | 12 | 0.49 | 0.28994 | 0.16955 | 12.039 |
| 20 | 20 | 1.54 | 0.43503 | 0.27798 | 15.705 |
| 30 | 30 | 2.03 | 0.40358 | 0.2528 | 15.078 |
| 40 | 40 | 2.85 | 0.41606 | 0.26267 | 15.339 |

La meilleure approximation normalement est obtenue avec la plus proche valeur du paramètre Y à l'unité. Pour Y=1.001, la valeur du $f_e$ dans les approximations converge vers un, indépendamment de la taille des particules. Ceci veut dire que la surface des plans I basals tend vers zéro, ce qui est le cas idéal (tableau 1a).

L'écart entre les deux approximations croît avec Y ainsi que l'effet de la taille des particules. À Y=1.01, il y a 3% d'écart entre les deux approximations et moins de 2% entre la taille des particules. Alors qu'à Y=1.5, l'écart est d'environ de 16%, alors que celui entre les particules demeure entre 2-3%.

Cette variation dans le facteur $f_e$ dépend de la façon de considérer la forme des particules élémentaires ainsi que le pas entre eux (Y), qui formera la particule sphérique finale. La divergence de $f_e$ de l'unité donne la fraction des plans basals. En fait, la forme sphérique des particules de graphite naturel est plus avantageuse et permet d'avoir un taux d'intercalation plus rapide et moins de capacité irreversible (moins de surface basale).

2) Quand le terme (1- $Y^{-2n}$) est considéré dans les équations (11) et (13);

Soit Y =1.1, les deux équations convergent rapidement (Fig. 3) après n itérations (n<50). Comme représenté sur la Figure 7/11, les résultats obtenus montrent que:

- les particules de taille petite sont les plus faciles à rendre sphérique (fe(2μm)>fe(40μm))
- l'approximation prismatique donne des valeurs de $f_e$, plus élevées.

Les exemples suivants qui sont donnés à titre purement illustratifs ne sauraient être interprétés comme constituants une quelconque limitation de la présente invention.

**Exemple 1 - préparation de particules de graphite modifié de forme patatoïde à partir de graphite naturel et par attrition**

Un graphite naturel ayant des particules de taille initiale de 375 μm, taux de pureté de 98% et une forme de paillette (flakes) est utilisé. La surface spécifique de ce graphite est d'environ 1 m²/g. La poudre du graphite naturel est broyée par un procédé "attrition" afin de transformer ces particules en particules sphériques.

Le $d_{002}$ n'a pas changé après la mise en forme sphérique et a une valeur de 3.36 Angströms. L'analyse par microscope électronique à balayage (SEM) a démontré sur la photo-la (Figure 8/11) comparé J à la photo-1b (Figure 9/11),avant attrition, le changement de la forme des particules alors que la taille est maintenue quasiment à la même échelle.

Le liant PVDF polyvinylidène fluoré est solubilisé dans le NMP n-méthyl pyrolidone. Un mélange des solvants acétone/toluène à 80/20 est ajouté à la pâte PVDF-NMP pour former la composition d'épandage. La poudre du graphite naturel transformée en sphérie est dispersée dans la composition d'épandage dans un ratio massique de 90:10. Ce mélange est appliqué sur un collecteur de cuivre par la méthode Doctor Blade. L'électrode est séchée par une lampe infrarouge. La dite électrode est montée dans une pile bouton de type 2035. Un séparateur Celgard$^{Tm}$ 2300 imbibé d'électrolyte 1M LiPF$_6$ + EC/DMC: 50/50 (carbonate d'éthylène + diméthylcarbonate) est utilisé.

Les tests électrochimiques ont été conduits à la température ambiante. Les courbes de charge ont été obtenues entre 0 et 2.5 Volts en C/24 pour deux piles boutons P1 et P2(Figure 4) Figure 10/11 La capacité réversible est de 370 mAh/g. Ce résultat est comparable à celui obtenu par des électrodes préparées à partir du graphite naturel standard en forme de flake ainsi qu'un graphite artificiel sous forme sphérique (MCMB28-25).

**Exemple 2 - préparation de particules de graphite modifié de forme patatoide à partir de graphite naturel et par jet milling**

Un graphite naturel ayant des particules de taille initiale de 375 μm, taux de pureté de 98% et une forme de paillette (flakes) est utilisé. La surface spécifique de ce graphite est d'environ 1 m²/g. Les particules sont réduites par Jet Milling jusqu'à 20 μm en premier lieu. En second lieu, les particules sont taillées en forme sphérique par attrition jusqu'à 10 μm.

**Exemple 3 - préparation de particules de graphite modifié de forme patatoide par jet milling et en présence de NH$_4$F**

On mélange dans un réacteur, 20 litres kgrammes d'un graphite brésilien d'une taille moyenne ($d_{50}$)de 350μm, d'une pureté de 98.5 % et avec 10% en poids de NH$_4$F.

Pour homogénéiser le mélange, la méthode de Jar mill a été mise en oeuvre avec des billes en céramique d'un diamètre de 50 mm, pendant 24 heures. Ce mélange est broyé avec le jet mill, la pression d'air dans le jet mill fluctuant pendant le traitement entre 100 et 125 psi.

A la fin du traitement, la taille moyenne des particules est réduite entre 10 et 20μm et les particules obtenues ont la forme d'un patatoïde.

La Figure 12/15 qui est une photo au MEB montre bien l'obtention de la forme patatoïde d'une particule de 12 μm.

La Figure 13/15 qui est une photo au MEB montre bien que la fonction basale (fb) diminue et que la fonction edge (fe) augmente, donc les plans de graphite au niveau basal rejoignent les plans de graphite au niveau edge dans la forme d'une dent de scie (vérification du modèle mathématique 1).

**Exemple 4 : préparation de particules de graphite modifié de forme patatoïde par attrition et en présence de NaCl**

On mélange dans un réacteur 20 kg d'un graphite brésilien d'une taille moyenne de particules ($d_{50}$) de 350μm, d'une pureté de 98,5 % et avec 10% en poids de NaCl.

L'homogénéisation du mélange est réalisée par la méthode de Jar mill avec des billes en céramique d'un diamètre de 50 mm, pendant 24 heures.

Ce mélange est broyé avec le jet mill. Le temps de résidence du mélange dans la chambre est de 45 minutes.

La pression d'air dans le jet mill fluctue pendant le traitement entre 100 et 125 psi.

Au cours du traitement, la taille des particules est réduite entre 10 et 20μm et la forme des particules obtenues est celle d'un patatoïde.

La photo MEB (Figure 14/15) montre bien l'obtention de la forme patatoïde d'une particule de 12 μm.

La photo MEB (Figure 15/15) montre bien que la fonction basale (fb) diminue et que la fonction edge (fe) augmente, résultat de l'arrondissement de la particule (vérification du model mathématique 1).

**Exemple 5 : Préparation de particules à base de graphite comportant un noyau enrobé d'une couche de carbonate de cellulose carbonisé**

Dans un récipient d'un volume de 200 mlitres, on prépare un mélange de 2 grammes d'un graphite brésilien d'une taille moyenne ($d_{50}$) de particules de 20μm et de forme prismatique avec 10% d'acétate de cellulose.
On dissout le mélange dans l'acétone et on l'homogénéise en utilisant la méthode du ball mill. Le mélange est traité à 400°C pendant 3 heures sous une atmosphère d'azote.
Les particules obtenues ont la forme d'un patatoïde.
Un des avantages de ce traitement est que la couche carbonisée obtenue à la surface joue le rôle de purificateur car elle couvre toutes les impuretés existantes à la surface.

**Exemple 6 - Préparation de particules à base de graphite comportant un noyau enrobé d'une couche de PE-PEO-glycol carbonisé**

Dans un réacteur de 200 mlitres, on prépare un mélange de 2 grammes d'un graphite brésilien d'une taille moyenne ($d_{50}$) de particule de 20μm et de forme prismatique avec 10% du composé PE-PEO-glycol.
Le mélange est dissous dans l'acétone puis homogénéisé en utilisant le ball milling. Le mélange est traité à 400°C pendant 3 heures sous une atmosphère d'azote.
Les particules obtenues ont la forme d'un patatoide.
Un des avantages de ce traitement est que cette couche carbonisé obtenue à la surface joue le rôle d'un purificateur car elle couvre toutes les impuretés existantes à la surface.

**Exemple 7 : Préparation de particules à base de graphite comportant un noyau enrobé d'une couche d'argent**

Un graphite Brésilien d'une taille moyenne de particules ($d_{50}$) de 20μm et de forme prismatique, d'une pureté de 98.5 % est recouvert en surface par 10% en poids d'un dépôt d'argent.
Le dépôt est fait par évaporation en utilisant un évaporateur de type Edwards Coating System Model E306A.
La capacité réversible est de 387 mAh/g, 15 mA/g de plus que la capacité théorique du graphite naturel.
Une faible surface spécifique est associée à une contribution en film de passivation plus faible. Il a ainsi été établi dans le cadre de la présente invention que cette couche de passivation se forme sur la partie basale (espèces organiques) : $ICL_{basal}$ et sur la partie edge (espèces inorganiques) : $ICL_{edge}$. En revanche le $ICL_{basal}$ est 40 fois supérieure $ICL_{edge}$. Ceci démontre que la diminution de la fonction basale est très importante afin de réduire la capacité irréversible et le dégagement des gaz. Ceci est relié à la sécurité de la batterie.

**Revendications**

1.  Particules de graphite modifié obtenues à partir de graphite (de préférence à partir de graphite synthétique), les paramètres structurels des dites particules vérifiant au moins une des relations $f1_e$ = [Y+1]/[(Y+1) + (B/2T)(Y-1)] et $f2_e$ = [Y+1]/[(Y+1) + (B/T)(Y-1)], dans lesquelles : Y représente un nombre réel supérieur ou égal à 1, B représente la longueur de la particule en μm, T représente l'épaisseur de la particule en μm, les dites particules ayant la forme d'un patatoïde et possédant au moins une des deux caractéristiques suivantes:

    -   une densité tab comprise entre 0,3 et 1,5, de préférence comprise entre 0,5 et 1,4, plus préférentiellement encore comprise entre 1 et 1,3 g/cc; et

    -   une dispersion granulométrique, telle que le rapport de distribution D90/D10 varie entre 2 et 5 et les particules ont une taille comprise entre 1μm et 50 μm, de préférence telle que le rapport de distribution D90/D10 varie entre 2.2 et 4.2 et les particules ont une taille comprise entre 2μm et 30 μm.

2.  Particules selon la revendication 1, **caractérisées en ce que** la densite tab est mesurée selon la méthode associée à l'appareil commercialisé sous l'appellation Logan Instrument Corp. Model Tap-2.

3.  Particules selon la revendication 1 ou 2, **caractérisées en ce que** la dispersion granulométrique est mesurée selon la méthode associée à l'analyseur de particules commercialisé sous l'appellation Microtac model X100 Particle Analyser.

**4.** Particules de graphite modifié obtenues à partir de graphite, les dites particules ayant la forme d'un patatoïde, possédant des impuretés dans leur structure interne et possédant en surface, un taux d'une ou de plusieurs impuretés qui est inférieur à 10%, qui de préférence varie entre 2% et 4% et les dites particules possédant en outre au moins une des trois caractéristiques suivantes:

- une densité tab mesurée selon la méthode définie dans la revendication 2 comprise entre 0,3 et 1,5, de préférence comprise entre 0,5 et 1,4, plus préférentiellement encore comprise entre 1 et 1,3 g/cc;

- une dispersion granulométrique mesurée selon la méthode définie dans la revendication 3 telle que le rapport D90/D10 varie entre 2,2 et 4,2 et les particules ont une taille comprise entre 2 et 30 $\mu$m; et

- elles comportent attachées à leur surface des particules (de préférence de forme patatoide, plus préférentiellement de forme sphérique) de NaCl et ou de $NH_4F$, de préférence la masse de ces particules de NaCl et/ou de $NH_4F$ représente de 1 à 10 %, de préférence de 1 à 4 % de la masse totale des particules de graphite modifié.

**5.** Particules de graphite modifié selon la revendication 4, **caractérisée en ce que** les valeurs de l'analyse TGA donne une valeur de la température initiale associée à la perte de poids comprise entre 560 et 660 degrés Celcius.

**6.** Particules de graphite modifié selon l'une quelconque des revendications 1 à 5, dans lesquelles les impuretés présentes sont au moins un élément chimique du groupe constitué par Fe, Mo, Sb, As, V, Cr, Cu, Ni, Pb, Co, Ca, Al, Ge, Si, Ba, Be, Cd, Ce, Co, Ciu, Dy, Eu, La, Li, Mo, Nd, Ni, Pb et Pr.

**7.** Particules de graphite modifié, selon la revendication 6, dans lesquelles le pourcentage en poids d'impuretés présentes dans lesdites particules, exprimé par rapport à la masse totale des particules de graphite modifié et mesuré selon la méthode des cendres, est compris entre 1 et 10 %, de préférence compris entre 2 et 4 %.

**8.** Particules de graphite modifié, selon la revendication 7, substantiellement dépourvues d'impuretés en surface, de préférence dépourvues d'impuretés en surface.

**9.** Particules de graphite modifié obtenues à partir de graphite, lesdites particules ayant la forme d'un patatoïde et contenant de 5 à 20 % d'au moins un des composés suivants $SiO_2$, MgO, céramiques ou un mélange de ces derniers, les dits composés étant de préférence attachés aux particules de graphite modifié par des forces physiques et possédant au moins une des trois caractéristiques suivantes:

- une densité tab mesurée selon la méthode définie dans la revendication 2 comprise entre 0.3 et 1.5, de préférence comprise entre 0.4 et 1.4, plus préférentiellement encore comprise entre 1 et 1,3 g/cc;

- une dispersion granulométrique mesurée selon la méthode définie dans la revendication 3 telle que le rapport D90/D10 varie entre 2 et 5 pour des particules d'une taille comprise entre 1 et 50 $\mu$m, de préférence telle que le rapport D90/D10 varie entre 2,2 et 4,2 pour des particules ayant une taille comprise entre 2 et 30 $\mu$m; et

- elles comportent attachées à leur surface des particules (de préférence de forme patatoïde, et encore plus préférentiellement de forme sphérique) de NaCl et ou de $NH_4F$, de préférence la masse de ces particules de NaCl et/ou de $NH_4F$ représente de 1 à 10 % de la masse totale des particules de graphite modifié.

**10.** Particules de graphite modifié selon l'une quelconque des revendications 1 à 9, dans lesquelles la distance inter-plan $d_{002}$ varie de 3,3 à 3,4 Angströms et/ou le BET varie entre 0.5 g/m$^2$ et 50 g/m$^2$.

**11.** Particules de graphite modifié selon l'une quelconque des revendications 1 à 10, présentant une stabilité au cyclage supérieure à 500 cycles.

**12.** Procédé de préparation de particules de graphite (de préférence à partir de graphite naturel)selon l'une quelconque des revendications 8 à 11, par mise en oeuvre d'au moins un moyen physique permettant la réduction d'au mois 50 % de la fonction basale (fb) et l'augmentation d'au moins 50 % de la fonction edge (fe), un tel moyen physique étant de préférence l'attrition, un jet mill, ball mill, hammer mill, atomizer mill, des particules de graphite en présence d'au moins un composé chimique choisi dans le groupe constitué par les composés de formule $MF_z$, dans laquelle M représente un métal alcalin ou alcalino-terreux et z représente 1 ou 2, (de préférence MFz représente $CaF_2$,

BaF$_2$, LiF), par NaCl et par NH$_4$F ou par un mélange de ces derniers, le ou lesdits composés étant de préférence ajouté(s) sous forme solide, de préférence au début de l'étape de mise en oeuvre du ou des moyens physiques permettant la réduction de la fonction basale.

**13.** Procédé selon la revendication 12, **caractérisé en ce que** la fonction basale est définie par la relation fb = 1 - fe et la fonction fe est définie par la relation (2B/La + T /d$_{002}$)/(2B/d$_{100}$+T/d$_{002}$) dans laquelle B, La = d$_{100}$(2n+1) représente d$_{002}$, n représente un nombre de plans.

**14.** Procédé selon l'une des revendications 12 ou 13, dans lequel la réduction de la fonction basale et l'augmentation de la fonction edge, de préférence l'arrondissement des particules est réalisé, de préférence à l'aide d'un moyen d'attrition, ledit moyen étant préférentiellement constitué par des billes tel que des billes d'acier, des billes en céramique ou un mélange de billes d'acier et en céramique.

**15.** Procédé de préparation de particules de graphite modifié selon la revendication 1 ou 4 à partir de préférence de graphite naturel, comportant au moins les deux étapes:

i) de modification de la forme des particules de graphite par mise en oeuvre d'au moins un moyen physique permettant la réduction d'au moins 50 % de la fonction basale (fb) et l'augmentation d'au moins 50 % de la fonction edge (fe), un tel moyen physique étant de préférence l'attrition (de préférence un jet mill, ball mill, hammer mill, un atomizer mill)de particules de graphite synthétique(de préférence de graphite naturel,) en présence d'au moins un composé chimique choisi dans le groupe constitué par les composés de formule MF$_z$, dans laquelle M représente un métal alcalin ou alcalino-terreux et z représente 1 ou 2, de préférence MF$_z$ représente CaF$_2$, BaF$_2$,LiF ou un mélange de ces derniers, le ou lesdits composés étant de préférence ajoutés sous forme de préférence solide, de préférence à température ambiante, de préférence au début de l'étape de mise en oeuvre du ou des moyens permettant la réduction de la fonction basale et l'augmentation de la fonction edge;

ii) de réduction du taux d'impuretés de surface de préférence par purification, de préférence par purification chimique des particules de graphite obtenues dans l'étape précédente i).

**16.** Procédé selon l'une quelconque des revendications 12 à 15, dans lequel les particules de graphite utilisées au départ du procédé ont une taille comprise entre 1 et 450 µm, de préférence comprise entre 2 et 350 µm.

**17.** Procédé selon l'une quelconque des revendications 12 à 16, dans lequel le traitement d'attrition est réalisé en présence d'un additif, de préférence d'un additif de type oxyde métallique, tel que SiO$_2$, TiO$_2$, ZrO$_2$ et de préférence en présence de billes d'acier, de billes en céramique ou en présence d'un mélange de billes d'acier et en céramique.

**18.** Procédé selon l'une quelconque des revendications 12 à 17, dans lequel au moins une des deux étapes est réalisée dans une atmosphère contrôlée ou à l'air, l'atmosphère contrôlée étant préférentiellement à base d'azote, d'argon, d'hélium ou un mélange de ces gaz.

**19.** Procédé selon l'une quelconque des revendications 15 à 18, dans lequel l'étape i) est une étape hybride mettant en oeuvre d'un Jet milling et une attrition, l'attrition étant de préférence réalisée après la mise en oeuvre du Jet milling.

**20.** Procédé selon l'une quelconque des revendications 15 à 18, dans lequel l'étape i) est réalisée par mise en oeuvre d'un Jet milling.

**21.** Utilisation des particules de graphite modifié selon l'une quelconque des revendications 1 à 11 pour les piles à combustible, les générateurs électrochimiques, comme capteur d'humidité et/ou comme capteur d'oxygène.

**22.** Electrode négative préférentiellement pour générateur électrochimique rechargeable préparée avec un liant de préférence avec un liant de type PVDF, PTFE et avec des particules de graphite selon l'une quelconque des revendications 1 à 10.

**23.** Procédé de préparation d'une électrode à base de particules de graphite tel que défini dans l'une quelconque des revendications 1 à 11 ou a à base de particules de graphite telles qu'obtenues par un procédé selon l'une quelconque des revendications 12 à 20 pour générateur rechargeable comprenant au moins les étapes suivantes:

a) de solubilisation d'au moins un liant(choisi de préférence dans le groupe constitué par PVDF et PTFE) dans un solvant (de préférence dans un solvant fort choisi dans le groupe constitué par NMP (N-méthyl pyrolidone)- et cyclopentanone, à une concentration la plus élevée possible (de préférence supérieure à 1g/cc), pour obtenir une solution visqueuse (A) ;

b) d'épandage de la solution visqueuse obtenue dans l'étape précédente qui est un mélange poudre-liant-composition (B) sur un dispositif de type collecteur de préférence de type collecteur métallique et/ou de type collecteur troué métallique, ledit collecteur ainsi traité constituant une électrode;

c) de séchage de l'électrode préparée dans l'étape b), le séchage se faisant de préférence à l'aide d'une lampe infrarouge ou à l'aide d'un élément chauffant.

**24.** Procédé de préparation d'une électrode à base de graphite pour générateur rechargeable selon la revendication 23, le procédé comprenant toutes les étapes citées dans la revendication 23 à l'exception de l'étape (c), où on utilise parallèlement les deux moyens de séchage par lampe infrarouge et l'élément chauffant pour le séchage de l'électrode.

**25.** Particules à base de graphite modifié constituées de particules prismatiques de graphite recouvertes d'un dépôt métallique et/ou d'un dépôt carbonique, les paramètres structurels des dites particules vérifiant les relations $f1_e = [Y+1]/[(Y+1) + (B/2T)(Y-1)]$ et $f2_e = [Y+1]/[(Y+1) + (B/T)(Y-1)]$, dans lesquelles : Y représente un nombre entier supérieur à 1, B représente la longueur de la particule en $\mu m$, T représente l'épaisseur de la particule en $\mu m$, les dites particules ayant la forme d'un patatoïde et possédant au moins une des deux caractéristiques suivantes:

- une densité tab mesurée selon la méthode définie dans la revendication 2, de préférence comprise entre 0,3 et 1,5, plus préférentiellement comprise entre 0,5 et 1,4, plus préférentiellement encore comprise entre 1 et 1,3 g/cc;

- une dispersion granulométrique mesurée selon la méthode définie dans la revendication 3 telle que le rapport D90/D10 varie entre 2 et 5 et les particules ont une taille comprise entre1 et 50 $\mu m$, de préférence telle que le rapport D90/D10 varie entre 2.2 et 4.2 et les particules ont une taille comprise entre 2 et 30 $\mu m$.

**26.** Particules à base de graphite selon la revendication 25 ayant une taille comprise entre 1 et 50 $\mu m$.

**27.** Particules à base de graphite selon la revendication 25 ou 26, ayant une sphéricité de 80 % et plus.

**28.** Particules à base de graphite selon l'une des revendications 25 à 27, dans lesquelles l'épaisseur moyenne de l'enrobage métallique et/ou carbonée est comprise entre 50 nm et 2 $\mu m$.

**29.** Particules à base de graphite constituées d'un noyau de graphite enrobé, ledit noyau constituant au moins 90 % en poids de la masse totale de la particule à base de graphite, les 10 % restant étant préférentiellement constitués d'au moins un métal choisi dans le groupe constitué par Ag, Si, Al et Cu et/ou de carbone et/ou de polymère carbonisé de préférence sous la forme prismatique ou de fibre.

**30.** Procédé de préparation de particules à base de graphite selon l'une quelconque des revendications 25 à 29, à partir de particules de forme prismatique par enrobage des particules en maintenant la fonction basale (fb) et la fonction edge (fe) constantes tout en enveloppant la surface du graphite par un dépôt métallique ou carbonique de manière à obtenir une sphéricité de 80 % et plus.

**31.** Utilisation des particules à base de graphite modifié telles que définies dans l'une quelconque des revendications 25 à 29 ou telles qu'obtenues par le procédé défini dans l'une quelconques des revendications 16 à 20, 23, 24, et 30 pour les piles à combustible, les générateurs électrochimiques, ou comme capteur d'humidité et/ou comme capteur d'oxygène.

**32.** Électrode négative préférentiellement pour générateur électrochimique rechargeable préparée avec un liant de préférence avec un liant de type PVDF, PTFE et avec des particules de graphite telles que définies dans l'une quelconque des revendications 25 à 29 ou telles qu'obtenues par le procédé défini dans la revendication 30.

**33.** Procédé de purification in situ de la surface de particules de graphite, par enrobage des particules, en présence de leurs impuretés, par du carbone.

**34.** Utilisation dans une pile électrochimique des particules de graphite modifié selon la revendication 1, avec un contrôle de la fonction basale (fb) qui permet leur utilisation en présence d'une électrolyte à base de Polyéthylène Carbonate (PC), la concentration en PC dans l'électrolyte étant alors inférieure à 50 % en volume du mélange électrolytique.

**35.** Batterie sécuritaire résultant de l'utilisation décrite dans la revendication 34.

**36.** Utilisation des particules à base de graphite selon la revendication 25, avec une fonction basale (fb) constante qui permet leur utilisation en présence d'une électrolyte à base de Polyéthylène Carbonate (PC), jusqu'à une concentration en PC dans l'électrolyte étant alors inférieure à 100 % en volume du mélange électrolytique.

**37.** Batterie sécuritaire résultant de l'utilisation décrite dans la revendication 36.

**38.** Particules selon la revendication 4, **caractérisées en ce que** le taux d'impuretés est mesuré selon une méthode de détecteur rétrodiffusé définie dans Kimoto S. et Hashimoto H., (1966) dans Electron Microphone, John Wiley, New York, page 480, ou dans Gedcke, D.A., Ayers, J.B. et DeNee, P.B. (1978), SEM/1978, SEM Inc. AMF O'Hare, Illinois, page 581.

**39.** Particules selon la revendication 5, **caractérisées en ce que** l'analyse TGA est réalisée selon la méthode associée à l'appareil commercialisé sous l'appelation TGA/DTA Model SDT 2960, TA Instruments Inc., New Castle, DE.

**40.** Particules selon la revendication 10, **caractérisées en ce que** la distance interplan interplan $d_{002}$ est mesurée selon la méthode associée au diffractomètre commercialisé sous l'appellation XRD analysis Siemens Model D500 Diffractometer.

**41.** Particules selon la revendication 10, **caractérisées en ce que** le BET est mesuré en utilisant la méthode associée à l'appareil Quantachrome Autosorb automated gas sorption system using $N_2$.

## Claims

**1.** Modified graphite particles obtained from graphite (preferably from synthetic graphite), structural parameters of the said particles corresponding to at least one of the equations $f1_{e} = [Y+1] / [Y+1] + (B/2T) (Y-1)]$ and $f2_{e} = [Y+1] / [Y+1] + (B/T) (Y-1)]$, where Y represents a whole number greater than or equal to 1, B represents the length of the particle in $\mu m$, T represents the thickness of the particules in $\mu m$, said particles having a patatolike shape and having at least one of the following two characteristics :

- a tab density between 0.3 and 1.5, preferably between 0.5 and 1.4, most preferably between 1 and 1.3 g/cc; and
- a granulometric dispersion such that the D90/D10 distribution ratio varies between 2 and 5 and the particles have a size between 1 $\mu m$ and 50 $\mu m$, preferably such that the D90/D10 distribution ratio varies between 2.2 and 4.2 and the particles have a size between 2 $\mu m$ and 30 $\mu m$.

**2.** Modified graphite particles according to claim 1, **characterized in that** the tab density is measured according to the method associated with the instrument sold under the name of Logan Instrument Corp. Model Tap-2.

**3.** Modified graphite particles according to any of claims 1 or 2, **characterized in** the the granulometric dispersion is measured according to method associated with the particle analyszer sold under the name Microtac Model X100 Particle Analyzer.

**4.** Modified graphite particles obtained from graphite, said particles having a potatolike shape, having impurities in their internal structure and having on their surface an amount of one or more impurities that is less than 10% and preferably varies between 2% and 4%, and the said particles also having at least one of the following three characteristics :

- a tab density measured according to the method identified in claim 2 between 0.3 and 1.5, preferably between 0.5 and 1.4, most preferably between 1 and 1.3 g/cc;

- a granulometric dispersion measured according to the method identified in claim 3, such that the D90/D10 ratio varies between 2.2 and 4.2 and the particles have a size between 2 and 30μm; and

- they have, attached to their surface, particles of NaCl and/or NaF (preferably potatolike shaped, most preferably spherical) preferably the mass of these particles of NaCl and/or of $NH_4F$ represents 1 to 10%, preferably 1 to 4%, of the total mass of the modified graphite particles.

5. Modified graphite particles according to claim 4, **characterized in that** TGA analysis values give an initial temperature value associated with the loss of weight between 560 and 660 degrees Celsius.

6. Modified graphite particles according to any one of claims 1 to 5, in which the impurities present are at least one chemical element selected from the group comprising Fe, Mo, Sb, As, V, Cr, Cu, Ni, Pb, Co, Ca, Al, Ge, Si, Ba, Be, Cd, Ce, Co, Ciu, Dy, Eu, La, Li, Mo, Nd, Ni, Pb and Pr.

7. Modified graphite particles according to claim 6 in which the percentage of impurities by weight present in the said particles, expressed with respect to the total weight of modified graphite particles and measured according to the ash method is between 1 and 10%, and preferably between 2 and 4%.

8. Modified graphite particles according to claims 7, substantially devoid of surface impurities, preferably devoid of surface impurities.

9. Modified graphite particles obtained from graphite, said particles having a potatolike shape and containing from 5 to 20% of at least one of the following compounds $SiO_2$, MgO, ceramic compounds or a mixture thereof, said compounds preferably being attached to the modified graphite particles by physical forces and having at least one of the following three characteristics :

- a tab density measured according to the method defined in claim 2 between 0.3 and 1.5, preferably between 0.4 and 1.4, most preferably between 1 and 1.3 g/cc;
- a granulometric dispersion measured according to the method defined in claim 3, such that the D90/D10 ratio varies between 2 and 5 for a particle size between 1 and 50 μm, preferably such that the D90/D10 ratio varies between 2.2 and 4.2 for the particle size between 2 and 30 μm; and
- they have, attached to their surface, particles (preferably of potatolike shape, more preferably of spherical shape) of NaCl and/or of $NH_4F$, preferably the mass of these particles of NaCl and/or of $NH_4F$ represents 1 to 4% of the total weight of the modified graphite particles.

10. Modified graphite particles according to any one of claims 1 to 9, in which the interplane distance $d_{002}$ varies from 3.3 to 3.4 angstroms and/or the BET varies between 0.5 g/m$^2$ and 50g/m$^2$.

11. Modified graphite particles according to any one of claims 1 to 10, having a cycling stability greater than 500 cycles.

12. Process for preparing graphite particles (preferably from natural graphite) according to any one of claims 8 to 11, by using at least one physical means that permits a reduction of at least 50% of the basal function (fb) and an increase of at least 50% of the edge function (fe) of the graphite particles, such physical means preferably being attrition, a jet mill, ball mill, hammer mill, atomizer mill, in the presence of at least one chemical compound chosen from the group consisting of compounds of the formula $MF_z$ in which M represents an alkaline or alkaline-earth metal and z represents 1 or 2 (preferably MFz represents $CaF_2$, $BaF_2$, LiF), NaCl and $NH_4F$ or a mixture there of, said compound or compounds preferably being added in solid form, preferably at the beginning of the step using the physical means that permit a reduction of the basal function.

13. A process according to claim 12, **characterized in that** the reduction of the basal function is defined by the relation fb = 1-fe and the increase of the function fe is defined by the relation $(2B/La + T/d_{002}) : (2B/d_{100}+T:d_{002})$ in which B, La = $d_{100}(2n+1)$ represents $d_{002}$, n represents a number of planes.

14. Process according to any of claims 12 or 13, in which the reduction of the basal function and the increase of the edge function, preferably rounding of the particles, is carried out preferably using a means of attrition, the said means preferably being made up of balls such as steel balls, ceramic balls or a mixture of steel and ceramic balls.

15. Process for preparing modified graphite particles according to claim 1 or 4, preferably from natural graphite, comprising at least the following two steps :

i) modification of the shape of the graphite particles by using at least one physical means permitting a reduction of at least 50% of the basal function (fb) and an increase of at least 50% of the edge function (fe) of synthetic graphite particles (preferably of natural graphite) such physical means preferably being attrition (preferably a jet mill, ball mill, hammer mill, an atomizer mill) in the presence of at least one chemical compound selected from the group comprising compounds of the formula $MF_z$, in which M represents an alkaline or alkaline-earth metal and z represents 1 or 2, $MF_z$ preferably represents $CaF_2$, $BaF2$, $LiF$, or a mixture thereof, the compound or compounds preferably being added in solid form, preferably at ambient temperature, preferably at the beginning of the step of use of the means that permit the reduction of the basal function and the increase of the edge function; and

ii) reduction in the amount of surface impurities, preferably by purification, preferably by chemical purification of the graphite particles obtained in the preceding step i).

16. Process according to any one of claims 12 to 15 in which the graphite particles used at the beginning of the process have a size between 1 and 450μm, preferably between 2 and 350 μm.

17. Process according to any one of claims 12 to 16, in which the attrition process is carried out in the presence of an additive, preferably an additive of the metallic oxide type such as $SiO_2$, $TiO_2$, $ZrO_2$, and preferably in the presence of steel balls, ceramics balls or in the presence of a mixture of steel and ceramic balls.

18. Process according to any one of claims 12 to 17, in which at least one of the two steps is carried out in a controlled atmosphere or in air, the controlled atmosphere preferably being based on nitrogen, argon, helium or a mixture of these gases.

19. Process according to any one of claims 15 to 18, in which step i) is a hybrid step using jet milling and attrition, the attrition preferably being carried out after jet milling is used.

20. Process according to any one of claims 15 to 18, in which step i) is carried out using jet milling.

21. Use of the modified graphite particles according to any one of claims 1 to 11 for fuel cells, electrochemical generators, as moisture sensors and/or as oxygen sensors.

22. Negative electrode, preferably for a rechargeable electrochemical generator prepared with a bonding agent, preferably a bonding agent of the PVDF or PTFE type, and with graphite particles according to any one of claims 1 to 10.

23. Process for preparing an electrode based on graphite particles as defined in any one of claims 1 to 11 or based on graphite particles such as those obtained by a process according to any one of claims 12 to 20 for a rechargeable generator comprising at least the following steps :

a- solubilization of at least one bonding agent (preferably selected from the group comprising PVDF or PTFE) in a solvent (preferably in a strong solvent selected from the group comprising NMP (N-methylpyrrolidone) and cyclopentanone at the highest possible concentration (preferably greater than 1 g/cc) to obtain a viscous solution (A) ;

b- coating the viscous solution obtained in the preceding step, which is a powder-bonding agent-composition mixture (B), on a device of the collector type, preferably on a collector of the metallic type and/or of perforated metal collector type, said collector thus treated forming an electrode; and

c- drying the electrode prepared in step b, the drying being preferably carried out using an infrared lamp or using a heating element.

24. Process for preparing an electrode based on graphite for a rechargeable generator according to claim 23, the method comprising all the steps cited in claim 23 with the exception of step (c) where two means of drying the electrode are used in parallel, drying with an infrared lamp and a heating element.

25. Modified graphite-based particles made up of prismatic particles of graphite covered with a metallic deposit and/or a carbonic deposit, the structural parameters of the said particles corresponding to the equations f1e = [Y+1]/[(Y+1) + (B/2T) (Y-1)] and f2e = [Y+1]/[(Y+1) + (B/T)(Y-1)], in which : Y represents a real number greater than or equal to 1, B represents the length of the particle in $\mu$m, T represents the thickness of the particle in $\mu$m, said particles having a potatolike shape and having at least one of the following two characteristics :

- a tab density measured according to the method defined in claim 2, preferably between 0.3 and 1.5, more preferably between 0.5 and 1.4, and most preferably between 1 and 1.3 g/cc;

- a granulometric dispersion measured according to the method defined in claim 3, such that the D90/D10 ratio varies between 2 and 5 and the particles have a size between 1 and 50 $\mu$m, preferably such that the D90/D10 ratio varies between 2.2 and 4.2 and the particles have a size between 2 and 30 $\mu$m.

26. Graphite-based particles according to claim 25 having a size between 1 and 50 $\mu$m.

27. Graphite-based particles according to claim 25 or 26, having a sphericity of 80% or more.

28. Graphite-based particles according to any one of claims 25 to 27, in which the average thickness of the metallic and/or carbonated coating is between 50 nm and 2 $\mu$m.

29. Graphite-based particles made up of a coated graphite core, said core making up at least 90% by weight of the total weight of the graphite-based particle, the remaining 10% preferably being made up of at least one metal selected from the group comprising Ag, Si, Al and Cu and/or of carbon and/or of carbonated polymer, preferably in prismatic or fiber form.

30. Process for preparing graphite-based particles according to any of claims 25 to 29, using prismatic-shaped particles, by coating the particles while keeping the basal function (fb) and the edge function (fe) constant while wrapping the graphite surface with a metallic or carbonic deposit in such a way as to obtain a sphericity of 80% or more.

31. Use of the modified graphite-based particles such as defined in any one of claims 25 to 29 or such as obtained by one of the processes defined in any one of claims 16 to 20, 23, 24 and 30 for fuel cells, electrochemical generators or as moisture absorbers and/or oxygen absorbers.

32. Negative electrode, preferably for a rechargeable electrochemical generator prepared with a bonding agent, preferably a bonding agent of the PVDF, PTFE type, and with graphite particles as defined in any one of claims 25 to 29 or such as obtained by the process defined in claim 30.

33. Process for in situ purification of the surface of graphite particles by coating the particles, in the presence of their impurities, with carbon.

34. Use in an electrochemical cell of the modified graphite particles according to claim 1, with a control of the basal function (fb) which permits their use in the presence of an electrolyte based on polyethylene carbonate (PC), the concentration of PC in the electrolyte then being less than 50% by volume of the electrolytic mixture.

35. Safe battery resulting from the use described in claim 34.

36. Use of the graphite-based particles according to claim 25, with a constant basal function (fb) which permits their use in the presence of an electrolyte based on polyethylen carbonate (PC), up to a concentration of PC in the electrolyte that is then less than 100% by volume of the electrolytic mixture.

37. Safe battery resulting from the use described in claim 36.

38. Modified graphite particles according to claim 4, **characterized in that** the rate of impurities is measured according to the method defined in the publication Kimoto S. and Hashimoto H., (1966) in Electron Microphone, John Wiley, New York, page 480, and in Gedcke, D.A., Ayers, J.B. and DeNee, P.B. (1978), SEM/1978, SEM Inc. Amf O'Hare, Illinois, page 581.

39. Modified graphite particles according to claim 5, **characterized in that** the TGA analysis is carried out according to the method associated with the device sold under the name TGA/DTA Model SDT 2960 from TA Instruments

Inc. New Castle.

40. 40. Modified graphite particles according to claim 10, **characterized in that** the interplan distance $d_{002}$ is measured according to the method associated with the dffractometer sold under the name XRD Analysis Siemens Model D500 Diffractometer.

41. Modified graphite particules according to claim 10, **characterized in that** the BET is measured using the method associated with the device Quantachrome Autosorb automated gas adsorption system using $N_2$.

**Patentansprüche**

1. Teilchen aus modifiziertem Graphit, die ausgehend von Graphit (vorzugsweise ausgehend von synthetischem Graphit) erhalten wurden, wobei für die Strukturparameter dieser Teilchen zumindest eine der folgenden Gleichungen gilt:

$$f1_e = [Y+1] / [(Y+1) + (B/2T)\ (Y-1)]\ \text{und}\ f2_e = [Y+1] / [(Y+1) + (B/T)\ (Y-1)],$$

worin Y eine ganze Zahl $\geq$ 1 ist, B die Länge eines Teilchens in µm ist und T die Dicke eines Teilchens in µm ist, wobei die Teilchen von kartoffelförmiger Gestalt sind und zumindest eine der beiden folgenden Eigenschaften aufweisen:

- eine Klopfdichte zwischen 0,3 und 1,5, vorzugsweise zwischen 0,5 und 1,4, noch bevorzugter zwischen 1 und 1,3 g/cm$^3$; und

- eine solche Teilchengrößenstreuung, dass das Verteilungsverhältnis D90/D10 zwischen 2 und 5 variiert und die Teilchen eine Größe zwischen 1 µm und 50 µm aufweisen, vorzugsweise eine solche, dass das Verteilungsverhältnis D90/D10 zwischen 2,2 und 4,2 variiert und die Teilchen eine Größe zwischen 2 und 30 µm aufweisen.

2. Teilchen nach Anspruch 1, **dadurch gekennzeichnet, dass** die Klopfdichte nach dem Verfahren mittels des unter der Bezeichnung Model Tap-2 von der Logan Instrument Corp. vertriebenen Geräts gemessen ist.

3. Teilchen nach Anspruch 1 oder 2, **dadurch gekennzeichnet, dass** die Teilchengrößenstreuung nach dem Verfahren mittels des unter der Bezeichnung Model X100 Particle Analyser von Microtac vertriebenen Teilchenanalysators gemessen ist.

4. Teilchen aus modifiziertem Graphit, erhalten ausgehend von Graphit, wobei diese Teilchen eine kartoffelförmige Gestalt aufweisen, über Verunreinigungen in ihrer inneren Struktur verfügen und an ihrer Oberfläche einen Anteil an einer oder mehreren der Verunreinigungen von unter 10 %, vorzugsweise zwischen 2 % und 4 %, aufweisen und wobei die Teilchen außerdem zumindest eine der folgenden drei Eigenschaften erfüllen:

- eine nach dem in Anspruch 2 definierten Verfahren gemessene Klopfdichte von zwischen 0,3 und 1,5, vorzugsweise zwischen 0,5 und 1,4, noch bevorzugter zwischen 1 und 1,3 g/cm$^3$;

- eine solche nach dem in Anspruch 3 definierten Verfahren gemessene Teilchengrößenstreuung, dass das Verteilungsverhältnis D90/D10 zwischen 2,2 und 4,2 variiert und die Teilchen eine Größe zwischen 2 und 30 µm aufweisen; und

- sie tragen an ihrer Oberfläche anhaftende NaCl- und/oder NH$_4$F-Teilchen (vorzugsweise mit kartoffelförmiger, noch bevorzugter kugelförmiger, Gestalt), wobei der Massenanteil dieser NaCl- und/oder NH$_4$F-Teilchen vorzugsweise 1 bis 10 %, noch bevorzugter 1 bis 4 %, bezogen auf die Gesamtmasse der Teilchen aus modifiziertem Graphit, beträgt.

5. Teilchen aus modifiziertem Graphit nach Anspruch 4, **dadurch gekennzeichnet, dass** die Werte der TGA-Analyse für die Temperatur des beginnenden Gewichtsverlusts einen Wert zwischen 560 und 660 °C besitzen.

**6.** Teilchen aus modifiziertem Graphit nach einem der Ansprüche 1 bis 5, worin die vorhandenen Verunreinigungen zumindest ein aus der aus Fe, Mo, Sb, As, V, Cr, Cu, Ni, Pb, Co, Ca, Al, Ge, Si, Ba, Be, Cd, Ce, Co, Ciu, Dy, Eu, La, Li, Mo, Nd, Ni, Pb und Pr bestehenden Gruppe ausgewähltes chemisches Element sind.

**7.** Teilchen aus modifiziertem Graphit nach Anspruch 6, worin die Gewichtsmenge der in den Teilchen vorhandenen Verunreinigungen, bezogen auf die Gesamtmasse der Teilchen aus modifiziertem Graphit und gemessen nach einem Veraschungsverfahren, zwischen 1 und 10 %, vorzugsweise zwischen 2 und 4 %, beträgt.

**8.** Teilchen aus modifiziertem Graphit nach Anspruch 7, die im Wesentlichen frei von Oberflächenverunreinigungen, vorzugsweise frei von Oberflächenverunreinigungen, sind.

**9.** Teilchen aus modifiziertem Graphit, die ausgehend von Graphit erhalten wurden, worin die Teilchen von kartoffelförmiger Gestalt sind und 5 bis 20 % zumindest einer der folgenden Verbindungen $SiO_2$, MgO, Keramiken oder einem Gemisch dieser Letzteren enthalten, wobei diese Verbindungen vorzugsweise durch physikalische Kräfte an den Teilchen aus modifiziertem Graphit anhaften und zumindest eine der folgenden drei Eigenschaften aufweisen:

- eine nach dem in Anspruch 2 definierten Verfahren gemessené Klopfdichte zwischen 0,3 und 1,5, vorzugsweise zwischen 0,4 und 1,4, noch bevorzugter zwischen 1 und 1,3 $g/cm^3$;

- eine solche nach dem in Anspruch 3 definierten Verfahren gemessene Teilchengrößenstreuung, dass das Verteilungsverhältnis D90/D10 für Teilchen mit einer Größe zwischen 1 μm und 50 μm zwischen 2 und 5 variiert, vorzugsweise eine solche, dass das Verteilungsverhältnis D90/D10 für Teilchen mit einer Größe zwi-schen 2 μm und 30 μm zwischen 2,2 und 4,2 variiert; und

- sie tragen an ihrer Oberfläche anhaftende NaCl- und/oder $NH_4F$-Teilchen (vorzugsweise mit kartoffelförmiger, noch bevorzugter kugelförmiger, Gestalt), wobei der Massenanteil dieser NaCl- und/oder $NH_4F$-Teilchen vor-zugsweise 1 bis 10 %, bezogen auf die Gesamtmasse der Teilchen aus modifiziertem Graphit, beträgt.

**10.** Teilchen aus modifiziertem Graphit nach einem der Ansprüche 1 bis 9, worin der Netzebenenabstand $d_{002}$ von 3,3 bis 3,4 Angström variiert und/oder der BET-Wert zwischen 0,5 $g/m^2$ und 50 $g/m^2$ variiert.

**11.** Teilchen aus modifiziertem Graphit nach einem der Ansprüche 1 bis 10, die eine hohe Zyklusbeständigkeit von über 500 Zyklen aufweisen.

**12.** Verfahren zur Herstellung von Teilchen aus Graphit (vorzugsweise ausgehend von natürlichem Graphit) nach einem der Ansprüche 8 bis 11 unter Einsatz zumindest eines physikalischen Mittels, das eine Reduktion der Basisfunktion (fb) um zumindest 50 % und einen Anstieg der Kantenfunktion (fe) um zumindest 50 % ermöglicht, wobei ein derartiges physikalisches Mittel vorzugsweise Trituration - in einer Strahlmühle, Kugelmühle, Hammermühle oder Zerstäubermühle - der Graphitteilchen in Gegenwart zumindest einer chemischen Verbindung ist, die aus der aus Verbindungen der Formel $MF_z$, worin M ein Alkalimetall oder Erdalkalimetall darstellt und z = 1 oder 2 ist (wobei $MF_z$ vorzugsweise für $CaF_2$, $BaF_2$, LiF steht), NaCl, $NH_4F$ und Gemischen der Letzteren bestehenden Gruppe ausgewählt ist, wobei diese Verbindung(en) vorzugsweise in festem Zustand zugesetzt wird bzw. werden, vorzugsweise am Beginn des Schrittes des Einsatzes des oder der physikalischen Mittel(s) zur Ermöglichung der Reduktion der Basisfunktion.

**13.** Verfahren nach Anspruch 12, **dadurch gekennzeichnet, dass** die Basisfunktion durch die Beziehung fb = 1 - fe definiert ist und die Funktion fe durch die Beziehung $(2B/La + T/d_{002}) / (2B/d_{100}+T/d_{002})$ definiert ist, worin B, La = $d_{100}(2n+1)$ für $d_{002}$ steht und n die Anzahl der Ebenen ist.

**14.** Verfahren nach einem der Ansprüche 12 oder 13, worin die Reduktion der Basisfunktion und der Anstieg der Kantenfunktion, vorzugsweise eine Abrundung der Teilchen, vorzugsweise mithilfe eines Triturationsmittels durchgeführt wird, wobei das Mittel vorzugsweise aus Kugeln, beispielsweise aus Stahlkugeln, Keramikkugeln oder einem Gemisch aus Stahl- und Keramikkugeln, besteht.

**15.** Verfahren zur Herstellung von Teilchen aus modifiziertem Graphit nach Anspruch 1 oder 4 ausgehend von natürlichem Graphit, das zumindest die beiden folgenden Schritte umfasst:

i) Modifikation der Form der Graphitteilchen durch Einsatz zumindest eines physikalischen Mittels, welches eine Reduktion der Basisfunktion (fb) um zumindest 50 % und einen Anstieg der Kantenfunktion (fe) um zumindest 50 % ermöglicht, wobei ein derartiges physikalisches Mittel vorzugsweise Trituration (vorzugsweise in einer Strahlmühle, Kugelmühle, Hammermühle oder Zerstäubermühle) von Teilchen aus synthetischem Graphit (vorzugsweise aus natürlichem Graphit) in Gegenwart zumindest einer chemischen Verbindung ist, die aus der aus chemischen Verbindungen der Formel $MF_z$, worin M ein Alkalimetall oder Erdalkalimetall ist und z = 1 oder 2 ist und $MF_z$ vorzugsweise für $CaF_2$, $BaF_2$ oder LiF oder ein Gemisch dieser Letzteren steht, bestehenden Gruppe ausgewählt ist, wobei diese Verbindung(en) vorzugsweise in festem Zustand, vorzugsweise bei Umgebungstemperatur, vorzugsweise am Beginn des Schrittes des Einsatzes des oder der physikalischen Mittel(s) zur Ermöglichung der Reduktion der Basisfunktion, zugesetzt wird/werden;
ii) Reduktion des Anteils an Oberflächenverunreinigungen, vorzugsweise durch Reinigung, noch bevorzugter durch chemische Reinigung, der im vorangegangenen Schritt i) erhaltenen Graphitteilchen.

16. Verfahren nach einem der Ansprüche 12 bis 15, worin die am Beginn des Verfahrens eingesetzten Graphitteilchen eine Größe zwischen 1 und 450 µm, vorzugsweise zwischen 2 und 350 µm, aufweisen.

17. Verfahren nach einem der Ansprüche 12 bis 16, worin die Triturationsbehandlung in Gegenwart eines Additivs, vorzugsweise eines Metalloxid-Additivs, beispielsweise von $SiO_2$, $TiO_2$, $ZrO_2$, und vorzugsweise in Gegenwart von Stahlkugeln, Keramikkugeln oder in Gegenwart eines Gemischs aus Stahl- und Keramikkugeln, durchgeführt wird.

18. Verfahren nach einem der Ansprüche 12 bis 17, worin zumindest einer der beiden Schritte in einer kontrollierten Atmosphäre oder in Luft durchgeführt wird, wobei die kontrollierte Atmosphäre vorzugsweise auf Stickstoff, Argon, Helium oder einem Gemisch dieser Gase basiert.

19. Verfahren nach einem der Ansprüche 15 bis 18, worin Schritt i) ein gemischter Schritt der Durchführung von Strahlmahlung und Trituration ist, wobei die Trituration vorzugsweise nach Durchführung der Strahlmahlung durchgeführt wird.

20. Verfahren nach einem der Ansprüche 15 bis 18, worin Schritt i) mittels Durchführung von Strahlmahlung durchgeführt wird.

21. Verwendung von Teilchen aus modifiziertem Graphit nach einem der Ansprüche 1 bis 11 für Brennstoffelemente, elektrochemische Generatoren, als Feuchtigkeitsfänger und/oder Sauerstofffänger.

22. Negative Elektrode, vorzugsweise für wiederaufladbare elektrochemische Generatoren, die unter Verwendung eines Bindemittels, vorzugsweise eines Bindemittels aus PVDF oder PTFE, und von Graphitteilchen nach einem der Ansprüche 1 bis 10 hergestellt ist.

23. Verfahren zur Herstellung einer Elektrode auf der Basis von in einem der Ansprüche 1 bis 11 definierten Graphitteilchen oder auf der Basis von durch ein Verfahren nach einem der Ansprüche 12 bis 20 erhaltenen Graphitteilchen für wiederaufladbare Generatoren, umfassend zumindest die folgenden Schritte:

a) Solubilisieren zumindest eines Bindemittels (ausgewählt aus der aus PVDF und PTFE bestehenden Gruppe) in einem Lösungsmittel (vorzugsweise in einem starken Lösungsmittel, ausgewählt aus der aus NMP (N-Methylpyrrolidon) und Cyclopentanon bestehenden Gruppe) in der höchstmöglichen Konzentration (vorzugsweise über 1 g/cm$^3$), um eine viskose Lösung (A) zu erhalten;
b) Verteilen der im vorangegangenen Schritt erhaltenen viskösen Lösung, die ein Gemisch einer Pulver-Bindemittel-Zusammensetzung (B) ist, auf einer Kollektorvorrichtung, vorzugsweise einer metallischen Kollektorvorrichtung und/oder einer gelochten metallischen Kollektorvorrichtung, wobei die so behandelte Kollektorvorrichtung eine Elektrode bildet;
c) Trocknen der in Schritt b) hergestellten Elektrode, wobei die Trocknung vorzugsweise mithilfe einer Infrarotlampe oder eines Heizelements durchgeführt wird.

24. Verfahren zur Herstellung einer Elektrode auf der Basis von Graphit für wiederaufladbare Generatoren nach Anspruch 23, wobei das Verfahren alle in Anspruch 23 beschriebenen Schritte mit Ausnahme des Schritts c) umfasst, wobei die beiden Trocknungsmittel Infrarotlampe und Heizelement parallel zur Trocknung der Elektrode eingesetzt werden.

**25.** Teilchen auf der Basis von modifiziertem Graphit, bestehend aus prismaförmigen Graphitteilchen mit einem Metallüberzug und/oder einem Kohlenstoffüberzug, wobei für die Strukturparameter der Teilchen die folgenden Gleichungen gelten:

$$f1_e = [Y+1] / [(Y+1) + (B/2T) (Y-1)] \text{ und } f2_e = [Y+1] / [(Y+1) + (B/T) (Y-1)],$$

worin Y eine ganze Zahl $\geq$ 1 ist, B die Länge eines Teilchens in µm ist, T die Dicke eines Teilchens in µm ist, wobei die Teilchen von kartoffelförmiger Gestalt sind und zumindest eine der beiden folgenden Eigenschaften aufweisen:

- eine nach dem in Anspruch 2 definierten Verfahren gemessene Klopfdichte, vorzugsweise zwischen 0,3 und 1,5, noch bevorzugter zwischen 0,5 und 1,4, insbesondere zwischen 1 und 1,3 g/cm$^3$;

- eine solche nach dem in Anspruch 3 definierten Verfahren gemessene Teilchengrößenstreuung, dass das Verteilungsverhältnis D90/D10 zwischen 2 und 5 variiert und die Teilchen eine Größe zwischen 1 µm und 50 µm aufweisen, vorzugsweise eine solche, dass das Verteilungsverhältnis D90/D10 zwischen 2,2 und 4,2 variiert und die Teilchen eine Größe zwischen 2 µm und 30 µm aufweisen.

**26.** Teilchen auf Graphitbasis nach Anspruch 25 mit einer Größe zwischen 1 und 50 µm.

**27.** Teilchen auf Graphitbasis nach Anspruch 25 oder 26 mit einer Sphärizität von 80 % und darüber.

**28.** Teilchen auf Graphitbasis nach einem der Ansprüche 25 bis 27, worin die mittlere Dicke der Metall- und/oder Kohlenstoffummantelung zwischen 50 nm und 2 µm beträgt.

**29.** Teilchen auf Graphitbasis, bestehend aus einem ummantelten Graphitkern, wobei der Kern zumindest 90 Gew.-% der Gesamtmasse der Teilchen auf Graphitbasis ausmacht, wobei die übrigen 10 % vorzugsweise aus zumindest einem aus der aus Ag, Si, Al und Cu bestehenden Gruppe ausgewählten Metall und/oder Kohlenstoff und/oder verkohltem Polymer bestehen, vorzugsweise in Form eines Prismas oder einer Faser.

**30.** Verfahren zur Herstellung von Teilchen auf Graphitbasis nach einem der Ansprüche 25 bis 29, ausgehend von Teilchen in Form von Prismen durch Ummantelung der Teilchen, wobei die Basisfunktion (fb) und die Kantenfunktion (fe) während der Ummantelung der Graphitoberfläche mit einem Metall- oder Kohlenstoffüberzug beibehalten werden, um eine Sphärizität von 80 % oder darüber zu erzielen.

**31.** Verwendung von Teilchen auf der Basis von modifiziertem Graphit, wie sie in einem der Ansprüche 25 bis 29 definiert sind oder nach einem der in einem der Ansprüche 16 bis 20, 23, 24 und 30 definierten Verfahren erhalten werden, für Brennstoffelemente, elektrochemische Generatoren oder als Feuchtigkeitsfänger und/oder Sauerstofffänger.

**32.** Negative Elektrode, vorzugsweise für wiederaufladbare elektrochemische Generatoren, die unter Verwendung eines Bindemittels, vorzugsweise eines Bindemittels aus PVDF oder PTFE, und von Graphitteilchen, wie in einem der Ansprüche 25 bis 29 definiert oder nach dem in Anspruch 30 definierten Verfahren erhalten, hergestellt ist.

**33.** Verfahren zur In-situ-Reinigung der Oberfläche von Graphitteilchen durch Ummantelung der Teilchen, in Gegenwart ihrer Verunreinigungen, mit Kohlenstoff.

**34.** Verwendung von Teilchen aus modifiziertem Graphit nach Anspruch 1 in einer elektrochemischen Zelle unter Kontrolle der Basisfunktion (fb), was deren Verwendung in Gegenwart eines Elektrolyten auf Basis von Polyethylencarbonat (PC) ermöglicht, wobei die Konzentration von PC im Elektrolyten unter 50 Vol.-% des Elektrolytgemischs ausmacht.

**35.** Sicherheitsbatterie als Resultat der in Anspruch 34 beschriebenen Verwendung.

**36.** Verwendung von Teilchen auf Graphitbasis nach Anspruch 25 mit einer konstanten Basisfunktion (fb), was deren Verwendung in Gegenwart eines Elektrolyten auf Basis von Polyethylencarbonat (PC) bis zu einer Konzentration von PC im Elektrolyten von unter 100 Vol.-% des Elektrolytgemischs ermöglicht.

**37.** Sicherheitsbatterie als Resultat der in Anspruch 36 beschriebenen Verwendung.

**38.** Teilchen nach Anspruch 4, **dadurch gekennzeichnet, dass** der Anteil an Verunreinigungen nach dem Verfahren mittels des von S. Kimoto und H. Hashimoto, "Electron Microphone", John Wiley, New York, S. 1480, (1996), oder von D.A. Gedcke, J.B. Ayers und P.B. DeNee, "SEM/1978", SEM Inc. AMF, O'Hare, Illinois, S. 581 (1978), definierten Rückstreudetektors gemessen wird.

**39.** Teilchen nach Anspruch 5, **dadurch gekennzeichnet, dass** die TGA-Analyse nach dem Verfahren mittels des unter der Bezeichnung TGA/DTA Model SDT 2960 von der TA Instruments Inc., New Castle, DE, vertriebenen Geräts durchgeführt wird.

**40.** Teilchen nach Anspruch 10, **dadurch gekennzeichnet, dass** der Netzebenenabstand $d_{002}$ nach dem Verfahrens mittels des unter der Bezeichnung XRD Analysis Siemens Model D500 Diffractometer vertriebenen Beugungsmessers durchgeführt wird.

**41.** Teilchen nach Anspruch 10, **dadurch gekennzeichnet, dass** der BET-Wert unter Anwendung des Verfahrens mittels des Geräts "Quantachrome Autosorb automated gas sorption system" unter Verwendung von $N_2$ gemessen wird.